(19) Europäisches Patentamt
European Patent Office
Office européen des brevets

(11) EP 4 393 984 A1

(12) EUROPEAN PATENT APPLICATION
published in accordance with Art. 153(4) EPC

(43) Date of publication:
**03.07.2024 Bulletin 2024/27**

(21) Application number: **22876376.9**

(22) Date of filing: **28.09.2022**

(51) International Patent Classification (IPC):
***C08J 3/22*** *(2006.01)* ***B60C 1/00*** *(2006.01)*
***C08K 3/36*** *(2006.01)* ***C08K 5/54*** *(2006.01)*
***C08K 5/541*** *(2006.01)* ***C08L 7/00*** *(2006.01)*
***C08L 9/00*** *(2006.01)*

(52) Cooperative Patent Classification (CPC):
**B60C 1/00; C08J 3/22; C08K 3/36; C08K 5/54; C08K 5/541; C08L 7/00; C08L 9/00**

(86) International application number:
**PCT/JP2022/036258**

(87) International publication number:
**WO 2023/054510 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.10.2021 JP 2021162925**
**23.06.2022 JP 2022101334**

(71) Applicant: **Tokuyama Corporation**
**Shunan-shi, Yamaguchi 745-8648 (JP)**

(72) Inventors:
- **KONDOU Manabu**
  **Shunan-shi, Yamaguchi 745-8648 (JP)**
- **NAKAMURA Masahiro**
  **Shunan-shi, Yamaguchi 745-8648 (JP)**
- **KUDO Yasuhiko**
  **Shunan-shi, Yamaguchi 745-8648 (JP)**
- **MATSUMOTO Tomoki**
  **Shunan-shi, Yamaguchi 745-8648 (JP)**

(74) Representative: **Canzler & Bergmeier Patentanwälte Partnerschaft mbB**
**Despag-Straße 6**
**85055 Ingolstadt (DE)**

(54) **MASTERBATCH, METHOD FOR PRODUCING MASTERBATCH, RUBBER COMPOSITION FOR TIRES, METHOD FOR PRODUCING RUBBER COMPOSITION FOR TIRES, AND RUBBER MATERIAL FOR TIRES**

(57) Provided are: a rubber material for tires having excellent wear resistance; a masterbatch and a rubber composition for tires suitable for producing same; and a method for producing same. The masterbatch contains 13-130 parts by mass of hydrophilic fumed silica and 1-40 parts by mass of a silane coupling agent with respect to 100 parts by mass of a diene-based rubber. The rubber composition for tires contains 5-90 parts by mass of hydrophilic fumed silica and 1.5-30 parts by mass of a silane coupling agent with respect to 100 parts by mass of a diene-based rubber. The method for producing a masterbatch comprises a step for kneading a diene-based rubber, hydrophilic fumed silica, and a silane coupling agent using a kneader.

Fig. 1

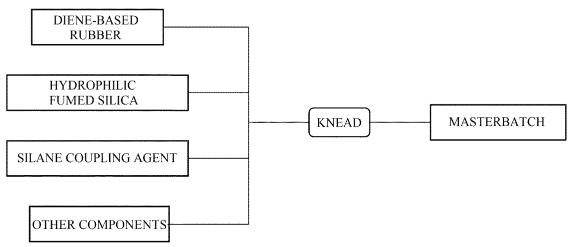


EP 4 393 984 A1

## Description

Technical Field

The present invention relates to a masterbatch, a method for producing a masterbatch, a rubber composition for a tire, a method for producing a rubber composition for a tire, and a rubber material for a tire.

Background Art

An automobile tire is required to have improved fuel efficiency to reduce a burden on the environment. In order to improve the fuel efficiency, it is effective to reduce rolling resistance of a tire. Generally, as an index of the rolling resistance of the tire, a loss tangent tanδ at 60°C, which is obtained by measuring a dynamic viscoelasticity of the tire, is used. The smaller the tanδ at 60°C, the lower the rolling resistance, and the better the fuel efficiency.

Patent Literature 1 discloses that silica produced by wet-process is blended as a filler into a rubber composition for a tire to reduce the rolling resistance. Patent Literature 2 discloses that a blending amount and a particle size of carbon black as a filler contained in a rubber composition for a tire are adjusted to reduce the rolling resistance.

Patent Literature 3 discloses a rubber composition for a tire that has good silica dispersibility to sufficiently obtain an effect of reducing a heat generation property of a tire.

An automobile tire is heated by frictional heat or the like during traveling. Therefore, a rubber composition constituting the automobile tire is required to have low thermal deterioration. Patent Literature 4 discloses a rubber composition for a tire that can improve grip performance, fuel efficiency, friction performance, heat resistance, weather resistance, etc.

Citation List

Patent Literature

Patent Literature 1: Japanese Patent Laid-Open No. 2015-218254
Patent Literature 2: Japanese Patent Laid-Open No. H06-256578
Patent Literature 3: Japanese Patent Laid-Open No. 2019-094463
Patent Literature 4: Japanese Patent Laid-Open No. 2011-52067

Summary of Invention

Technical Problem

Among automobile tires, a heavy duty tire used for a truck, a bus, or the like is required to have a longer traveling life of a tire than that of a passenger car tire. Therefore, the heavy duty tire is required to have not only the fuel efficiency and the heat resistance but also high wear resistance performance.

However, when the rubber composition for a tire blended with the silica produced by wet-process described in Patent Literature 1 is used for the heavy duty tire, there is a problem that the wear resistance performance remarkably decreases.

When the rubber composition for a tire blended with the carbon black described in Patent Literature 2 is used for the heavy duty tire, there are also problems that mechanical properties of the tire, such as tensile strength at break, tensile elongation at break, and rubber hardness, decrease, and wear resistance and uneven wear resistance decrease.

The present invention has been made in view of such circumstances, and has an object of providing a rubber material for a tire with excellent wear resistance, a masterbatch and a rubber composition for a tire suitable for producing the same, and methods for producing the masterbatch and the rubber composition for a tire.

Solution to Problem

The present inventors have found that a rubber material for a tire with excellent wear resistance can be obtained by blending hydrophilic fumed silica instead of carbon black or silica produced by wet-process as a filler of a rubber composition for a tire.

However, it has been found that the hydrophilic fumed silica is bulkier than the silica produced by wet-process, and thus in a Banbury mixer usually used for kneading a rubber composition, the hydrophilic fumed silica tends to scatter

during kneading, and it is difficult to obtain a rubber composition in which the hydrophilic fumed silica is sufficiently dispersed.

Based on the finding, the present inventors have further intensively studied, and as a result, have found that the above finding can be solved by using a kneading machine having a low rotor rotation speed, which is not usually used for kneading the rubber composition due to productivity.

From the above, aspects of the present invention are as follows.

[1] A masterbatch contains 13 parts by mass or more and 130 parts by mass or less of hydrophilic fumed silica, and 1 part by mass or more and 40 parts by mass or less of a silane coupling agent, with respect to 100 parts by mass of a diene-based rubber.
[2] In the masterbatch according to [1], the hydrophilic fumed silica has a BET specific surface area of 50 $m^2/g$ or more and 500 $m^2/g$ or less.
[3] In the masterbatch according to [1] or [2], the diene-based rubber is at least one selected from the group consisting of a natural rubber and an isoprene rubber.
[4] The masterbatch according to any one of [1] to [3] further contains 1 part by mass or more and 40 parts by mass or less of a lubricant with respect to 100 parts by mass of the diene-based rubber.
[5] A method for producing a masterbatch includes a step of using a kneader to knead a diene-based rubber, hydrophilic fumed silica, and a silane coupling agent.
[6] In the method for producing a masterbatch according to [5], the hydrophilic fumed silica has a BET specific surface area of 50 $m^2/g$ or more and 500 $m^2/g$ or less.
[7] The method for producing a masterbatch according to [5] or [6] further includes kneading a lubricant.
[8] A rubber composition for a tire contains 5 parts by mass or more and 90 parts by mass or less of hydrophilic fumed silica, and 1.5 parts by mass or more and 30 parts by mass or less of a silane coupling agent, with respect to 100 parts by mass of a diene-based rubber.
[9] In the rubber composition for a tire according to [8], the hydrophilic fumed silica has a BET specific surface area of 50 $m^2/g$ or more and 500 $m^2/g$ or less.
[10] The rubber composition for a tire according to [8] or [9] further contains the masterbatch according to any one of [1] to [4].
[11] A method for producing a rubber composition for a tire includes a step of kneading the masterbatch according to any one of [1] to [4] and a diene-based rubber.
[12] A rubber material for a tire, A hardness is 55 to 72, and a crosslink density based on a toluene swelling method is $4 \times 10^{-5}$ mol/mL or more and less than $27.5 \times 10^{-5}$ mol/mL.
[13] The rubber material for a tire according to [12] is obtained by vulcanizing the rubber composition for a tire according to any one of [8] to [10].

## Advantageous Effects of Invention

According to the present invention, it is possible to provide a rubber material for a tire with excellent wear resistance, a masterbatch and a rubber composition for a tire suitable for producing the same, and methods for producing the masterbatch and the rubber composition for a tire.

## Brief Description of Drawings

[Figure 1] Figure 1 is a process diagram of a method for producing a masterbatch according to the present embodiment.
[Figure 2] Figure 2 is a process diagram of a method for producing a rubber material for a tire using the masterbatch according to the present embodiment.

## Description of Embodiments

Hereinafter, the present invention will be described in detail in the following order based on a specific embodiment.

1. Masterbatch

1.1. Diene-based Rubber

1.2. Hydrophilic Fumed Silica
1.3. Silane Coupling Agent
1.4. Other Components

2. Method for Producing Masterbatch

2.1. Kneader
2.2. Kneading Step

3. Rubber Composition for Tire
4. Method for Producing Rubber Composition for Tire
5. Rubber Material for Tire

(1. Masterbatch)

A masterbatch according to the present embodiment is a kneaded product used to obtain a rubber material, and contains a diene-based rubber, hydrophilic fumed silica, and a silane coupling agent.

(1. 1. Diene-based Rubber)

Examples of the diene-based rubber contained in the masterbatch according to the present embodiment include a natural rubber, an isoprene rubber, a butadiene rubber, a styrene-butadiene rubber, an acrylonitrile-butadiene rubber, a butyl rubber, an ethylenepropylene-diene rubber, and a chloroprene rubber. Among them, at least one selected from a natural rubber and an isoprene rubber is preferred.

(1.2. Hydrophilic Fumed Silica)

Fumed silica is silicon dioxide in a form of fine particles produced by high temperature hydrolysis of silicon tetrachloride in an oxyhydrogen flame. Therefore, the fumed silica is produced by a method different from that of silica produced by wet-process, and has a smaller primary particle size of a primary aggregate (minimum constituent) and a larger nitrogen adsorption BET specific surface area than those of the silica produced by wet-process. Particles of the fumed silica are aggregated and fused in a form of beads, and form a bulky agglomerate.
The fumed silica is divided into hydrophilic fumed silica and hydrophobic fumed silica based on a property with respect to water. Silanol groups are present on a surface of the fumed silica. The silanol groups are chemically active and particularly easily react with water. Therefore, a surface treatment (hydrophobic treatment) of lowering reactivity with water by reacting the silanol groups with another substance may be performed. Hydrophobized fumed silica is called hydrophobic fumed silica, and unhydrophobized fumed silica is called hydrophilic fumed silica.
In the present embodiment, the hydrophobic fumed silica and the hydrophilic fumed silica are distinguished by the following modified hydrophobic degree (M value). The modified hydrophobic degree (M value) is a value obtained by a measurement method that utilizes a fact that the hydrophobic fumed silica floats in water but completely suspends in methanol. As a method of measuring the M value, a method described in Examples of International Publication No. 2004/099075 can be adopted. When the hydrophobic fumed silica and the hydrophilic fumed silica are expressed using the M value, the hydrophobic fumed silica has an M value of 1 or more, and the hydrophilic fumed silica has an M value of less than 1.
The fumed silica contained in the masterbatch according to the present embodiment is hydrophilic fumed silica. As will be described later, it is considered that the hydrophilic fumed silica forms a structure caused by the fumed silica more easily than the hydrophobic fumed silica. It is considered that since such a structure is present in a rubber material for a tire obtained by vulcanizing a rubber composition for a tire, wear resistance of the rubber material for a tire is improved. On the other hand, the hydrophobic fumed silica is less likely to form such structures and tends to have insufficient improvement in wear resistance.
In the present embodiment, the hydrophilic fumed silica is sufficiently dispersed in the masterbatch even in a bulky state by adopting a kneading method to be described later. Therefore, a tap density of the hydrophilic fumed silica is preferably less than 200 g/L, more preferably 150 g/L or less, and even more preferably 100 g/L or less.
In the present embodiment, although the tap density of the hydrophilic fumed silica may be 200 g/L, a compression treatment is usually required to increase the tap density of the hydrophilic fumed silica to 200 g/L or more. Therefore, there is a problem that an extra step is required and a cost is increased.
A lower limit of the tap density of the hydrophilic fumed silica is not particularly limited, and from a viewpoint of production, the lower limit of the tap density is, for example, 30 g/L.

In the present embodiment, a BET specific surface area of the hydrophilic fumed silica is preferably 50 $m^2/g$ or more, 80 $m^2/g$ or more, 120 $m^2/g$ or more, 200 $m^2/g$ or more, 250 $m^2/g$ or more, 300 $m^2/g$ or more, or 350 $m^2/g$ or more. When the BET specific surface area of the fumed silica is within the above range, the number of the silanol groups serving as a reaction site with the diene-based rubber or the silane coupling agent in the hydrophilic fumed silica can be sufficiently secured. As a result, the hydrophilic fumed silica and the diene-based rubber can be kneaded well.

An upper limit of the BET specific surface area of the hydrophilic fumed silica is not particularly limited, and is, for example, 500 $m^2/g$. When the BET specific surface area of the hydrophilic fumed silica is too small, it is necessary to increase a flame temperature at the time of producing the fumed silica, the structure unique to the fumed silica is lost, and it tends to be impossible to stably produce the fumed silica. When the BET specific surface area of the hydrophilic fumed silica is too large, stable production tends to be impossible.

In the masterbatch, a blending amount of the hydrophilic fumed silica is 13 parts by mass or more and 130 parts by mass or less with respect to 100 parts by mass of the diene-based rubber. That is, the masterbatch according to the present embodiment can contain, at a high concentration, the hydrophilic fumed silica which is difficult to be kneaded and hardly dispersed in the diene-based rubber. Therefore, by producing the rubber composition for a tire using the masterbatch, the rubber material for a tire with excellent wear resistance can be easily obtained.

In the masterbatch, the blending amount of the hydrophilic fumed silica is more preferably 15 parts by mass or more, and even more preferably 20 parts by mass or more, with respect to 100 parts by mass of the diene-based rubber. On the other hand, the blending amount of the hydrophilic fumed silica is more preferably 110 parts by mass or less, and even more preferably 100 parts by mass or less, with respect to 100 parts by mass of the diene-based rubber.

When the blending amount of the hydrophilic fumed silica is too small, wear resistance performance of the obtained rubber material for a tire tends to be insufficient. When the blending amount of the hydrophilic fumed silica is too large, the hydrophilic fumed silica is not sufficiently dispersed in the diene-based rubber, and a good kneaded product tends not to be obtained.

(1.3. Silane Coupling Agent)

When the silane coupling agent is contained in the masterbatch, a crosslinked structure between a hydrophobic diene-based rubber and the hydrophilic fumed silica is easily formed via the silane coupling agent. As a result, dispersibility of the hydrophilic fumed silica in the masterbatch can be improved, and the wear resistance of the rubber material for a tire can be improved.

The silane coupling agent is not particularly limited as long as the silane coupling agent is usually used in the rubber composition. In the present embodiment, a sulfur-containing silane coupling agent is preferred. Examples of the sulfur-containing silane coupling agent include bis-(3-triethoxysilylpropyl) tetrasulfide, bis(3-triethoxysilylpropyl) disulfide, 3-trimethoxysilylpropylbenzothiazole tetrasulfide, γ-mercaptopropyltriethoxysilane, 3-octanoylthiopropyltriethoxysilane, or a mercapto-thiocarboxylate oligomer.

In the present embodiment, from a viewpoint of heat resistance (heat aging property) of the rubber composition for a tire, the silane coupling agent is preferably a blocked mercaptosilane, and particularly preferably a mercapto-thiocarboxylate oligomer.

The mercapto-thiocarboxylate oligomer is a thiocarboxylate oligomer having a mercapto group. Examples of a molecular structure of the mercapto-thiocarboxylate oligomer are shown below. In the following molecular structure, a sum (x + y) of a repeating number (x) of a linking unit A and a repeating number (y) of a linking unit B is preferably in a range of 3 to 300. Within the range, mercaptosilane of the linking unit B is covered with $-C_7H_{15}$ of the linking unit A, so that a scorch time can be prevented from being shortened and good reactivity with the hydrophilic fumed silica and the diene-based rubber can be secured. Specific examples of the mercapto-thiocarboxylate oligomer include "NXT-Z45" manufactured by Momentive.

[Chem. 1]

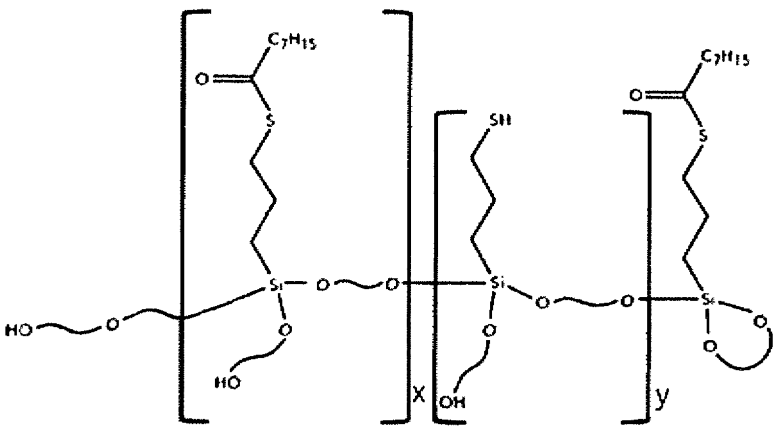

LINKING UNIT A LINKING UNIT B

In the masterbatch, a blending amount of the silane coupling agent is 1 part by mass or more and 40 parts by mass or less with respect to 100 parts by mass of the diene-based rubber. When the blending amount of the silane coupling agent is too small, the dispersibility of the hydrophilic fumed silica in the rubber composition for a tire tends to be easily insufficient. When the blending amount of the silane coupling agent is too large, silane coupling agents are easily subjected to condensation, and the wear resistance performance of the obtained rubber material for a tire tends to be insufficient.

In the masterbatch, the blending amount of the silane coupling agent is more preferably 1.5 parts by mass or more, and even more preferably 2 parts by mass or more, with respect to 100 parts by mass of the diene-based rubber. On the other hand, the blending amount of the silane coupling agent is more preferably 30 parts by mass or less, and even more preferably 20 parts by mass or less, with respect to 100 parts by mass of the diene-based rubber.

Within a range of the blending amount of the silane coupling agent with respect to 100 parts by mass of the diene-based rubber, the blending amount of the silane coupling agent is preferably relatively increased as the BET specific surface area of the hydrophilic fumed silica increases. This is because a reaction site with the hydrophilic fumed silica can be sufficiently secured. Specifically, it is particularly preferable to add the silane coupling agent in a range of 0.33 $mg/m^2$ to 1 $mg/m^2$ with respect to the specific surface area of the silica to be added.

By setting the blending amounts of the diene-based rubber, the hydrophilic fumed silica, and the silane coupling agent in the masterbatch to more appropriate ranges, a rubber material for a tire that can realize good fuel efficiency in addition to good wear resistance can be easily obtained.

(1.4. Other Components)

In the present embodiment, in addition to the above components (diene-based rubber, hydrophilic fumed silica, and silane coupling agent), the masterbatch may also contain a component to be blended into the rubber composition. Examples of such a component include a lubricant. When the masterbatch contains a lubricant, a kneading property of the masterbatch is improved.

Examples of the lubricant include stearic acid and a process oil. The lubricant may be used alone, or may be used in a combination of two or more kinds. Examples of the process oil include an aroma oil, a paraffin oil, and a naphthene oil. These may be used alone, or may be used in a combination of two or more kinds.

A blending amount of the lubricant is not limited as long as an effect of the present invention is obtained. For example, the blending amount of the lubricant is preferably 1 part by mass or more and 40 parts by mass or less with respect to 100 parts by mass of the diene-based rubber. Further, the blending amount of the lubricant is more preferably 2 parts by mass or more, and even more preferably 3 parts by mass or more, with respect to 100 parts by mass of the diene-based rubber. On the other hand, the blending amount of the lubricant is more preferably 35 parts by mass or less, and even more preferably 30 parts by mass or less, with respect to 100 parts by mass of the diene-based rubber.

When the blending amount of the lubricant is too small, there is a concern that the kneading property of the masterbatch is poor, and the wear resistance performance of the obtained rubber material for a tire cannot be sufficiently improved. When a blending amount of stearic acid is too large, there is a concern that the hydrophilic fumed silica cannot be sufficiently dispersed in the diene-based rubber due to no shearing during kneading.

Further, the masterbatch may contain a reinforcing filler in addition to the hydrophilic fumed silica. Examples of the reinforcing filler include carbon black, clay, mica, talc, calcium carbonate, aluminum hydroxide, aluminum oxide, and titanium oxide. When the reinforcing filler is to be blended, a filler coupling agent can also be blended in an appropriate

amount. A blending amount of the reinforcing filler is not limited as long as the effect of the present invention can be obtained, and may be a general blending amount.

The masterbatch may further contain various additives such as zinc oxide, an antioxidant, a plasticizer, a processing aid, a liquid polymer, and a thermosetting resin. Blending amounts of these additives are not limited as long as the effect of the present invention can be obtained, and may be general blending amounts.

(2. Method for Producing Masterbatch)

As shown in Figure 1, the masterbatch according to the present embodiment is obtained by kneading the above diene-based rubber, the above hydrophilic fumed silica, the above silane coupling agent, and other components as necessary.

(2.1. Kneader)

In the present embodiment, kneading is performed using a kneader to sufficiently knead the hydrophilic fumed silica into the diene-based rubber and sufficiently disperse the hydrophilic fumed silica in the masterbatch.

In the related art, a Banbury mixer is used to knead silica as a filler into the diene-based rubber and sufficiently disperse the silica in the masterbatch or the rubber composition. The Banbury mixer applies a high shear force to raw materials by rotating a rotor at a high speed while pressurizing the blended raw materials with a weight, and kneads the raw materials. For example, when the silica produced by wet-process having a high tap density is kneaded, the Banbury mixer is useful.

However, when the hydrophilic fumed silica having a lower tap density and a higher bulk than silica produced by wet-process is kneaded into the diene-based rubber using the Banbury mixer, the hydrophilic fumed silica is easily scattered. Therefore, there is a problem that the amount of the hydrophilic fumed silica to be actually kneaded is less than a target blending amount. Further, there is a problem that the kneaded hydrophilic fumed silica is likely to aggregate in the masterbatch or the rubber composition and is not sufficiently dispersed.

Therefore, the present inventors knead the hydrophilic fumed silica into the diene-based rubber using the kneader to prevent the hydrophilic fumed silica during kneading from scattering and to obtain the masterbatch in which the kneaded hydrophilic fumed silica is sufficiently dispersed.

Similar to the Banbury mixer, the kneader is a type of an internal mixer. A difference from the Banbury mixer is a rotor rotation speed. From a viewpoint of improving the productivity, the rotor rotation speed of the Banbury mixer is usually 45 rpm to 80 rpm, whereas the rotor rotation speed of the kneader is 20 rpm to 40 rpm.

It is considered that when the rotor rotation speed is lower than that of the Banbury mixer, the bulky hydrophilic fumed silica is less likely to scatter during kneading in the kneader, and is sufficiently kneaded and dispersed.

It is confirmed by the present inventors that the hydrophilic fumed silica cannot be sufficiently kneaded even if the rotor rotation speed of the Banbury mixer is set to the same degree as the rotor rotation speed of the kneader. It is considered that this is because in the Banbury mixer, the rotor rotation speed suitable for kneading in the Banbury mixer is set, and a rotor structure of the Banbury mixer is optimized such that the kneading proceeds sufficiently within a range of the set rotor rotation speed.

The kneader may be a pressurization type kneader or an open kneader that does not apply a pressure. In the present embodiment, the pressurization type kneader is preferred to sufficiently knead and disperse the hydrophilic fumed silica. A pressurization type kneader capable of performing stepwise pressure control is more preferred.

(2.2. Kneading Step)

In a kneading step, the above diene-based rubber, the above hydrophilic fumed silica, the above silane coupling agent, and other components as necessary are charged into the kneader and kneaded. The rotor rotation speed is 20 rpm to 40 rpm as described above. It is preferable to adjust an amount of cooling water such that a temperature of the kneaded product is in a range of 130°C to 160°C. In a case of the pressurization type kneader, the kneading time is preferably about 20 minutes to 60 minutes. The kneading time in the case of the open kneader is preferably longer than the kneading time in the case of the pressurization type kneader. After completion of the kneading, a masterbatch in which the above components are kneaded is obtained. The masterbatch is a masterbatch containing, at a high concentration, the bulky hydrophilic fumed silica, which is usually difficult to be sufficiently kneaded and dispersed.

(3. Rubber Composition for Tire)

A rubber composition for a tire according to the present embodiment contains a diene-based rubber, hydrophilic fumed silica, and a silane coupling agent.

In the rubber composition for a tire, a blending amount of the hydrophilic fumed silica is 5 parts by mass or more and 90 parts by mass or less with respect to 100 parts by mass of the diene-based rubber. When the blending amount of the hydrophilic fumed silica is too small, wear resistance performance of the obtained rubber material for a tire tends to be insufficient. When the blending amount of the hydrophilic fumed silica is too large, the hydrophilic fumed silica is not sufficiently dispersed in the diene-based rubber, and a good kneaded product tends not to be obtained.

In the rubber composition for a tire, the blending amount of the hydrophilic fumed silica is preferably 10 parts by mass or more, and more preferably 15 parts by mass or more, with respect to 100 parts by mass of the diene-based rubber. On the other hand, the blending amount of the hydrophilic fumed silica is preferably 70 parts by mass or less, and more preferably 55 parts by mass or less, with respect to 100 parts by mass of the diene-based rubber.

A range of the BET specific surface area of the hydrophilic fumed silica is preferably the same as the range of the BET specific surface area of the hydrophilic fumed silica contained in the masterbatch described above.

In the rubber composition for a tire, a blending amount of the silane coupling agent is 1.5 parts by mass or more and 30 parts by mass or less with respect to 100 parts by mass of the diene-based rubber. When the blending amount of the silane coupling agent is too small, dispersibility of the hydrophilic fumed silica in the rubber composition for a tire tends to be easily insufficient. When the blending amount of the silane coupling agent is too large, there is a concern that silane coupling agents are easily subjected to condensation, and the wear resistance of the obtained rubber material for a tire cannot be sufficiently improved.

In the rubber composition for a tire, the blending amount of the silane coupling agent is preferably 2.0 parts by mass or more, and more preferably 2.5 parts by mass or more, with respect to 100 parts by mass of the diene-based rubber. On the other hand, the blending amount of the silane coupling agent is preferably 25 parts by mass or less, and more preferably 20 parts by mass or less, with respect to 100 parts by mass of the diene-based rubber.

By setting the blending amounts of the diene-based rubber, the hydrophilic fumed silica, and the silane coupling agent in the rubber composition for a tire to more appropriate ranges, a rubber material for a tire that can realize good fuel efficiency in addition to good wear resistance can be easily obtained.

The rubber composition for a tire according to the present embodiment preferably contains the above masterbatch. That is, the rubber composition for a tire according to the present embodiment is preferably produced using the above masterbatch. By using the above masterbatch, a rubber composition for a tire containing a predetermined amount of the hydrophilic fumed silica which is difficult to be kneaded and dispersed is easily obtained.

In the present embodiment, in addition to the above components (diene-based rubber, hydrophilic fumed silica, and silane coupling agent), the rubber composition for a tire may also contain a component to be blended into the rubber composition.

The rubber composition for a tire may contain a process oil. Examples of the process oil include an aroma oil, a paraffin oil, and a naphthene oil. These may be used alone, or may be used in a combination of two or more kinds. A blending amount of the process oil is preferably 2 parts by mass to 10 parts by mass, and more preferably 4 parts by mass to 8 parts by mass, with respect to 100 parts by mass of the diene-based rubber.

The rubber composition for a tire may contain a reinforcing filler in addition to the hydrophilic fumed silica. Examples of the reinforcing filler include carbon black, clay, mica, talc, calcium carbonate, aluminum hydroxide, aluminum oxide, and titanium oxide. Further, when the reinforcing filler is to be blended, a filler coupling agent can also be blended in an appropriate amount. Blending amounts of these reinforcing fillers may be general blending amounts as long as the effect of the present invention can be obtained.

When the carbon black is contained as the reinforcing filler, a blending amount of the carbon black is preferably, for example, more than 0 parts by mass and 60 parts by mass or less with respect to 100 parts by mass of the diene-based rubber.

The rubber composition for a tire may contain silica produced by wet-process as a filler. The silica produced by wet-process is generally silica synthesized by a neutralization reaction between sodium silicate and a mineral acid (usually sulfuric acid). The silica produced by wet-process is generally classified into precipitated silica and gel-type silica. In the present embodiment, the silica produced by wet-process is preferably precipitated silica.

However, the amount of water adsorbed to silanol groups on a surface of the silica produced by wet-process is larger than that of the fumed silica. It is considered that the adsorbed water prevents a crosslinked structure from being formed. Therefore, the amount of the silica produced by wet-process required for an effect caused by the crosslinked structure via the silanol groups is larger than the amount of the fumed silica. In other words, in order to achieve the same effect as the effect achieved by the fumed silica, a blending amount of the silica produced by wet-process blended is larger than the blending amount of the fumed silica.

Further, since the silica produced by wet-process has a BET specific surface area smaller than the fumed silica, the blending amount of the silica produced by wet-process required to achieve target hardness of the rubber material for a tire tends to be large.

As described above, from a viewpoint of properties of the rubber material for a tire, the blending amount of the silica produced by wet-process is preferably small. On the other hand, the fumed silica is more expensive than the silica

produced by wet-process, and thus from a viewpoint of a cost, it is preferable to contain the silica produced by wet-process.

When the rubber composition for a tire contains the silica produced by wet-process, the blending amount of the silica produced by wet-process may be a general blending amount as long as the effect of the present invention can be obtained. For example, the blending amount of the silica produced by wet-process is preferably more than 0 parts by mass and 100 parts by mass or less, and more preferably more than 0 parts by mass and 60 parts by mass or less, with respect to 100 parts by mass of the diene-based rubber. The silica produced by wet-process may be mixed with the fumed silica before the step of kneading with the diene-based rubber, or may be added in the step of kneading the fumed silica and the diene-based rubber.

The rubber composition for a tire may contain various components for a tire such as a vulcanizing agent or a crosslinking agent, a vulcanization accelerator, sulfur, zinc oxide, stearic acid, an antioxidant, a plasticizer, a processing aid, a liquid polymer, and a thermosetting resin. Such components can be blended before or after kneading the rubber composition for a tire, and assist in vulcanization or crosslinking of the rubber composition for a tire. Blending amounts of these components for a tire may be general blending amounts as long as the effect of the present invention can be obtained. For example, a total blending amount of the sulfur and the vulcanization accelerator is preferably 1.5 parts by mass or more and 7 parts by mass or less with respect to 100 parts by mass of the diene-based rubber.

The rubber composition for a tire according to the present embodiment is excellent in wear resistance, and is thus suitable for a heavy duty tire or a tire tread thereof.

(4. Method for Producing Rubber Composition for Tire)

As shown in Fig. 2, the rubber composition for a tire is preferably obtained by kneading the above masterbatch, a diene-based rubber, and the above components as necessary. In the present embodiment, the rubber composition for a tire is preferably produced by blending other components into the masterbatch. In addition to the diene-based rubber contained in the masterbatch, a diene-based rubber is further blended. On the other hand, the hydrophilic fumed silica is not blended because it is sufficiently contained in the masterbatch.

In the above method for producing the masterbatch, although kneading is performed using the kneader, a kneading machine used for kneading the rubber composition for a tire is not particularly limited. That is, a Banbury mixer or a kneader may be used. Since the kneading is performed using the masterbatch in which the hydrophilic fumed silica is sufficiently kneaded and dispersed, a kneaded product (rubber composition for a tire) can be obtained while maintaining a good dispersion state of the hydrophilic fumed silica even when the kneading is performed using the Banbury mixer. The kneading may be performed using the kneader, and from a viewpoint of improving the productivity, the kneading is preferably performed using the Banbury mixer.

A kneading condition may be a condition under which the masterbatch and respective components are sufficiently kneaded.

The rubber composition for a tire may be produced without using the masterbatch. In this case, as described above, since the hydrophilic fumed silica is bulky, the rubber composition for a tire is produced using the kneader. The rubber composition for a tire may be produced by simultaneously charging all the components into the kneader and kneading them, or may be produced by charging respective components stepwise.

(5. Rubber Material for Tire)

A rubber material for a tire according to the present embodiment is a material obtained by vulcanizing the rubber composition for a tire.

The rubber material for a tire is adjusted such that A hardness of the rubber material for a tire is in a range of 55 to 72 to have hardness suitable for a tire. A usual rubber material for a tire containing carbon black or silica produced by wet-process as a filler has a structure in which a rubber and the carbon black or the silica are cross-linked via sulfur, a structure in which the rubber and the carbon black or the silica are cross-linked via a silane coupling agent, and the like. As a result, the A hardness and a crosslink density of the rubber material for a tire are usually in a proportional relationship.

The rubber material for a tire according to the present embodiment has A hardness in a range of 55 to 72, however, the crosslink density of the rubber material for a tire according to a toluene swelling method is in a range of $4.0 \times 10^{-5}$ mol/mL or more and less than $27.5 \times 10^{-5}$ mol/mL.

The rubber material for a tire according to the present embodiment contains the hydrophilic fumed silica derived from the above rubber composition for a tire. In the rubber material for a tire, in addition to a structure in which a diene-based rubber and hydrophilic fumed silica are crosslinked via sulfur and a structure in which a diene-based rubber and hydrophilic fumed silica are crosslinked via a silane coupling agent, it is considered that there is a structure caused by the hydrophilic fumed silica, and that the structure is contribute to the A hardness.

On the other hand, it is considered that, in the toluene swelling method, which is a method for measuring the

crosslink density, the structure in which the rubber and the hydrophilic fumed silica are crosslinked via sulfur and the structure in which the rubber and the hydrophilic fumed silica are crosslinked via the silane coupling agent are not dissolved in toluene, whereas the structure caused by the hydrophilic fumed silica is dissolved in toluene. As a result, the structure caused by the hydrophilic fumed silica contributes to the A hardness but is not reflected in a measured value of the crosslink density. Therefore, it is considered that although the A hardness of the rubber material for a tire according to the present embodiment is in the range of 55 to 72, the crosslink density based on the toluene swelling method is lower than that of the rubber material for a tire in which the carbon black, the silica produced by wet-process, and the like are blended.

In addition, it is considered that when a stress is applied to the rubber material for a tire, the structure is broken or connected, and as a result, the stress is dispersed and the wear resistance of the rubber material for a tire is improved.

It is confirmed by the present inventors that the hydrophobic fumed silica has a small effect described above.

The crosslink density is preferably 27.1 $\times$ $10^{-5}$ mol/mL or less. The crosslink density is preferably 6 $\times$ $10^{-5}$ mol/mL or more.

Although the embodiment of the present invention has been described above, the present invention is not limited to the above embodiment, and may be modified in various modes within the scope of the present invention.

The rubber material for a tire has excellent wear resistance, and thus can be suitably used for each component of the tire. Among these, the rubber material for a tire can be suitably used for a tread, a base tread, a sidewall, a clinch, and the like. A vehicle to which the rubber material for a tire of the present invention can be applied is not particularly limited, and the rubber material for a tire can be suitably applied to a passenger vehicle, a truck, a bus, a construction heavy machine, an EV, and a low pollution vehicle (eco car) in cope with global environmental protection, which require the wear resistance.

Examples

Hereinafter, the present invention will be described in more detail in Examples. However, the present invention is not limited to the following Examples.

(Experiment 1)

(Preparation of Masterbatch)

The following components were charged into a pressurization kneader having a volume of 0.5 L such that blending amounts with respect to 100 parts by mass of a diene-based rubber were blending amounts as shown in Table 1. After charging, the components were kneaded for about 30 minutes at a rotor rotation speed in a range of 20 rpm to 40 rpm in a temperature of a kneaded product in a range of 130°C to 160°C. An air cylinder pressure was 0.7 MPa. After completion of the kneading, cooling to room temperature was performed, and a kneaded product was taken out to obtain a masterbatch.

(A) Diene-based rubber
(A-1) Natural rubber SVR made in Vietnam
(B) Filler
(B-1) Hydrophilic fumed silica (Reolosil QS-30C manufactured by Tokuyama Corporation, nitrogen adsorption BET specific surface area: 300 $m^2$/g, tap density: 100 g/L)
(B-2) Hydrophobic fumed silica (Reolosil KS-30SC manufactured by Tokuyama Corporation, nitrogen adsorption BET specific surface area: 230 $m^2$/g, tap density: 80 g/L, M value: 55)
(B-3) Precipitated silica (NipsilAQ, manufactured by Tosoh Silica Corporation, nitrogen adsorption BET specific surface area: 200 $m^2$/g, tap density: 300 g/L)
(B-4) Carbon black (SEAST 6 manufactured by Tokai Carbon Co., Ltd., nitrogen adsorption BET specific surface area: 120 $m^2$/g, tap density: 400 g/L)
(C) Silane coupling agent
(C-1) Mercapto-thiocarboxylate oligomer (NXT-Z45, manufactured by Momentive)
(C-2) Bis-(3-triethoxysilylpropyl) tetrasulfide (Si69, manufactured by Evonik)
(D) Other components
(D-1) Lubricant (stearic acid, Beads Stearic Acid YR, manufactured by NOF Corporation)
(D-2) Process oil (Aromax 3 (TDAE Oil), manufactured by Fuji Kosan Co., Ltd.)
(D-3) Process oil (1,3-propanediol, manufactured by FUJIFILM Wako Pure Chemical Corporation)

[Table 1]

| | | | Standard Example 1 | Standard Example 2 | Standard Example 3 | Example 1 | Example 2 | Example 3 | Example 4 | Example 5 | Example 6 | Example 7 | Example 8 | Example 9 | Standard Example 4 |
|---|---|---|---|---|---|---|---|---|---|---|---|---|---|---|---|
| Blending of masterbatch | Diene-based rubber | A-1 | 100 | 100 | 100 | 100 | 100 | 100 | 100 | 100 | 100 | 100 | 100 | 100 | 100 |
| | Filler | B-1 | 0 | 0 | 0 | 90 | 82 | 64 | 64 | 64 | 64 | 64 | 64 | 69 | 0 |
| | | B-2 | 0 | 0 | 0 | 0 | 0 | 0 | 0 | 0 | 0 | 0 | 0 | 0 | 64 |
| | | B-3 | 0 | 64 | 80 | 0 | 0 | 0 | 0 | 0 | 0 | 0 | 0 | 0 | 0 |
| | | B-4 | 90 | 0 | 0 | 0 | 0 | 0 | 0 | 0 | 0 | 0 | 0 | 0 | 0 |
| | Silane coupling agent | C-1 | 0 | 8.2 | 10.6 | 11 | 11 | 8.4 | 8.4 | 8.4 | 0 | 0 | 0 | 8.7 | 0 |
| | | C-2 | 0 | 0 | 0 | 0 | 0 | 0 | 0 | 0 | 5.2 | 5.2 | 5.2 | 0 | 5.2 |
| | Other components | D-1 | 6 | 6 | 6 | 6 | 6 | 6 | 6 | 6 | 6 | 6 | 6 | 9 | 6 |
| | | D-2 | 4 | 4 | 4 | 4 | 4 | 4 | 12 | 20 | 4 | 4 | 4 | 6 | 4 |
| | | D-3 | 0 | 0 | 0 | 0 | 0 | 0 | 0 | 0 | 0 | 10 | 20 | 0 | 0 |

(Preparation of Rubber Composition for Tire)

The obtained masterbatch, (A-1), and the following (D-4) and (D-5) were charged into an internal Banbury mixer having a volume of 1.7 L. After charging, the above components were kneaded for about 10 minutes at a rotor rotation speed in a range of 45 rpm to 80 rpm in a temperature of a kneaded product in a range of 130°C to 160°C. A ram pressure during the kneading was in a range of 0.5 MPa to 4.0 MPa. After completion of the kneading, cooling to room temperature was performed, and a kneaded product was obtained.

The following (D-6) and (D-7) were added to the obtained kneaded product, followed by mixing by a 6-inch roll testing machine to obtain a rubber composition for a tire. Blending in the obtained rubber composition for a tire is shown in Table 2.

(D) Other components
(D-4) Antioxidant (OZONONE 6C manufactured by Seiko Chemical Co., Ltd.)
(D-5) Lubricant (zinc oxide: zinc oxide Type III, manufactured by SEIDO Chemical Industry Co., Ltd.)
(D-6) Sulfur (Gold Flower brand oil-containing sulfur powder, manufactured by Tsurumi Chemical Industry Co., Ltd.)
(D-7) Vulcanization accelerator (N-(tert-butyl)-2-benzothiazolesulfenamide (TBBS): Sanceler NS-G, manufactured by SANSHIN Chemical Industry Co. Ltd.)

[Table 2]

| | | | Standard Example 1 | Standard Example 2 | Standard Example 3 | Example 1 | Example 2 | Example 3 | Example 4 | Example 5 | Example 6 | Example 7 | Example 8 | Example 9 | Standard Example 4 |
|---|---|---|---|---|---|---|---|---|---|---|---|---|---|---|---|
| Blending of rubber composition for tire | Diene-based rubber | A-1 | 100 | 100 | 100 | 100 | 100 | 100 | 100 | 100 | 100 | 100 | 100 | 100 | 100 |
| | Filler | B-1 | 0 | 0 | 0 | 45 | 42 | 32 | 32 | 32 | 32 | 32 | 32 | 23 | 0 |
| | | B-2 | 0 | 0 | 0 | 0 | 0 | 0 | 0 | 0 | 0 | 0 | 0 | 0 | 32 |
| | | B-3 | 0 | 32 | 42 | 0 | 0 | 0 | 0 | 0 | 0 | 0 | 0 | 0 | 0 |
| | | B-4 | 45 | 13 | 13 | 0 | 13 | 13 | 13 | 13 | 13 | 13 | 13 | 23 | 13 |
| | Silane coupling agent | C-1 | 0 | 4.2 | 5.6 | 5.5 | 5.5 | 4.2 | 4.2 | 4.2 | 0 | 0 | 0 | 2.9 | 0 |
| | | C-2 | 0 | 0 | 0 | 0 | 0 | 0 | 0 | 0 | 2.6 | 2.6 | 2.6 | 0.0 | 2.6 |
| | Other components | D-1 | 3.0 | 3.0 | 3.0 | 3.0 | 3.0 | 3.0 | 3.0 | 3.0 | 3.0 | 3.0 | 3.0 | 3.0 | 3.0 |
| | | D-2 | 2.0 | 2.0 | 2.0 | 2.0 | 2.0 | 2.0 | 6.0 | 100 | 2.0 | 2.0 | 2.0 | 2.0 | 2.0 |
| | | D-3 | 0.0 | 0.0 | 0.0 | 0.0 | 0.0 | 0.0 | 0.0 | 0.0 | 0.0 | 5.0 | 100 | 0.0 | 0.0 |
| | | D-4 | 2.0 | 2.0 | 2.0 | 2.0 | 2.0 | 2.0 | 2.0 | 2.0 | 2.0 | 2.0 | 2.0 | 2.0 | 2.0 |
| | | D-5 | 3.0 | 3.0 | 3.0 | 3.0 | 3.0 | 3.0 | 3.0 | 3.0 | 3.0 | 3.0 | 3.0 | 3.0 | 3.0 |
| | | D-6 | 2.3 | 2.3 | 2.3 | 2.0 | 2.0 | 2.0 | 2.0 | 2.0 | 1.7 | 1.7 | 1.7 | 2.0 | 2.0 |
| | | D-7 | 1.2 | 1.6 | 1.6 | 1.2 | 1.2 | 1.6 | 1.6 | 1.6 | 1.6 | 1.6 | 1.6 | 2.0 | 1.5 |
| Rubber composition for tire | Mooney viscosity (ML1+4, 100°C) | | 70 | 44 | 50 | 70 | 72 | 66 | 65 | 57 | 83 | 58 | 61 | 61 | 75 |
| Rubber material for tire | A hardness | | 66 | 65 | 68 | 66 | 65 | 65 | 64 | 61 | 65 | 69 | 70 | 65 | 66 |
| | Rolling resistance index | | 1.0 | 1.7 | 1.2 | 1.4 | 1.2 | 1.3 | 1.2 | 1.2 | 1.1 | 1.7 | 1.8 | 1.6 | 1.6 |
| | Wear index | | 1.0 | 1.3 | 1.0 | 2.2 | 2.7 | 1.7 | 2.0 | 2.2 | 2.4 | 1.7 | 1.5 | 1.6 | 1.3 |
| | Crosslink density (× E-05) (mol/mL) | | 29.3 | 27.7 | 29.4 | 9.9 | 10.4 | 10.8 | 12.9 | 14.8 | 6.3 | 12.5 | 11.8 | 12.9 | 29.2 |

A test piece for performing the following evaluations on the obtained rubber composition for a tire was prepared. The obtained test piece was used to evaluate the following physical properties.

(Workability: Mooney Viscosity)

A Mooney viscosity at 100°C (ML1+4, 100°C) of the obtained test piece made of the rubber composition for a tire was measured in accordance with JIS K6300-1 using a Mooney viscosity meter (VR-1132 manufactured by Ueshima Seisakusho Co., Ltd.). When the Mooney viscosity is low, the workability of the rubber composition for a tire tends to be good. The results are shown in Table 2.

(Preparation of Rubber Material for Tire)

Subsequently, the obtained rubber composition for a tire was press-vulcanized at 150°C for 10 minutes to obtain a rubber material for a tire. A test piece for performing the following evaluations on the obtained rubber material for a tire was prepared. The obtained test piece was used to evaluate the following physical properties.

(A hardness)

A hardness (Shore A hardness) of the obtained test piece made of the rubber material for a tire was measured in accordance with JIS K6253 Type A by a durometer. The target A hardness of the rubber material for a tire is 65, and thus the A hardness of the test piece is preferably around 65. The results are shown in Table 2.

(Fuel efficiency: tanδ at 60°C)

The obtained test piece made of the rubber material for a tire was measured in accordance with JIS K6394 using a dynamic viscoelasticity tester (VR-7130 manufactured by Ueshima Seisakusho Co., Ltd.) under the following conditions. Tanδ (60°C) was calculated based on a measured value at 60°C.

Measurement temperature: 60°C
Static strain: 10%
Dynamic strain: ± 2%
Frequency: 10 Hz

A rolling resistance index was calculated by the following calculation equation with the calculated tanδ (60°C) in Standard Example 1 being set to 1.0. The larger the index, the better the rolling resistance. The results are shown in Table 2.

(Rolling resistane index) = (tanδ (60°C) in Standard Example 1) (tanδ (60°C) in Examples)

(Wear resistance performance: FPS wear amount)

An FPS wear amount of the obtained test piece made of the rubber material for a tire was measured using an FPS wear tester (AB-2012 manufactured by Ueshima Seisakusho Co., Ltd.) under conditions including a temperature of 20°C, a load of 40 N, a slip ratio of 10%, and a test time of 2 minutes. A volume loss was calculated based on the FPS wear amount, and a wear index was calculated by the following calculation equation with a loss amount in Standard Example 1 being set to 1.0. The larger the index, the better the wear resistance performance. The results are shown in Table 2.

$$\text{(Wear index)} = \text{(loss amount in Standard Example 1)}/\text{(loss amount in Examples)}$$

(Crosslink density: toluene swelling method)

The crosslink density was calculated based on a toluene swelling method. First, a test piece made of the rubber material for a tire was immersed in toluene at a temperature of 20°C for 48 hours. Thereafter, from the obtained data, the crosslink density at which a filler did not swell was calculated based on the following Flory-Rehner equation. The

results are shown in Table 2.

[Math. 1]

$$\nu = \frac{V_R + \ln(1 - V_R) + \mu {V_R}^2}{-V\left({V_R}^{\frac{1}{3}} - \frac{V_R}{2}\right)} [\mathrm{mol/mL}]$$

Here, "V" in the equation was a molecular volume (mL/mol) of a solvent, and in the present examples, since toluene was used as the solvent, "V" was 106.1.

"$V_R$" in the equation is a volume fraction of only a rubber in a swollen gel, and is obtained based on the following equation.

$$V_R = V_P/(V_P+V_S)$$

"$V_P$" is the volume of only a rubber in the test piece, and is obtained based on the following equation.

$$V_P = (100W1)/(Z\times d)$$

"W1" is a weight of a rubber test piece. "Z" is a total weight ratio of the rubber and a blending agent in the test piece, and "d" is a density of the rubber.

"Vs" is the volume of the solvent absorbed by the test piece, and is obtained based on the following equation.

$$V_S = (W2\text{-}W3)/ds$$

"W2" is a weight of the rubber test piece swollen with toluene, and "W3" is a weight of the rubber test piece after drying and removing toluene. "ds" is a density of the solvent (toluene).

"$\mu$" is an interaction constant between the rubber and the solvent. In the present examples, since toluene was used as the solvent, "$\mu$" was 0.39.

From Table 2, it has been confirmed that the rubber material for a tire produced using the masterbatch in which the hydrophilic fumed silica is kneaded at a high concentration has wear resistance higher than that of a rubber material for a tire produced using a masterbatch in which carbon black, silica produced by wet-process, or hydrophobic fumed silica is kneaded.

In addition, it has been confirmed that the crosslink density of the rubber material for a tire produced using the masterbatch in which the hydrophilic fumed silica is kneaded at a high concentration is lower than that of the rubber material for a tire produced using the masterbatch in which the carbon black, the silica produced by wet-process, or the hydrophobic fumed silica is kneaded.

(Experiment 2)

The following components were charged into a pressurization kneader having a volume of 0.5 L such that blending amounts with respect to 100 parts by mass of a diene-based rubber were blending amounts as shown in Table 3. After charging, the components were kneaded for about 30 minutes at a rotor rotation speed in a range of 20 rpm to 40 rpm in a temperature of a kneaded product in a range of 130°C to 160°C. An air cylinder pressure was 0.7 MPa. After completion of the kneading, cooling to room temperature was performed, and the kneaded product was taken out to obtain a masterbatch.

(A) Diene-based rubber

(A-1) Natural rubber SVR made in Vietnam

(B) Filler

(B-1) Hydrophilic fumed silica (Reolosil QS-30C manufactured by Tokuyama Corporation, nitrogen adsorption BET specific surface area: 300 $m^2/g$, tap density: 100 g/L)

(B-4) Carbon black (SEAST 6 manufactured by Tokai Carbon Co., Ltd., nitrogen adsorption BET specific surface area: 120 $m^2/g$, tap density: 400 g/L)

(C) Silane coupling agent

(C-1) Mercapto-thiocarboxylate oligomer (NXT-Z45, manufactured by Momentive)

(D) Other components

(D-1) Lubricant (stearic acid, Beads Stearic Acid YR, manufactured by NOF Corporation)

(D-2) Process oil (Aromax 3 (TDAE Oil), manufactured by Fuji Kosan Co., Ltd.)

[Table 3]

| | | | Standard Example 1 | Standard Example 2 | Example 1 | Example 2 |
|---|---|---|---|---|---|---|
| Blending of masterbatch | Diene-based rubber | A-1 | 100 | 100 | 100 | 100 |
| | Filler | B-1 | | | 64 | 64 |
| | | B-4 | 90 | 90 | | |
| | Silane coupling agent | C-1 | | | 12.8 | 12.8 |
| | Other components | D-1 | 6 | 6 | 6 | 6 |
| | | D-2 | 4 | 4 | 4 | 4 |

(Preparation of Rubber Composition for Tire)

The obtained masterbatch, (A-1), and the following (D-4) and (D-5) were charged into an internal Banbury mixer having a volume of 1.7 L. After charging, the above components were kneaded for about 10 minutes at a rotor rotation speed in a range of 45 rpm to 80 rpm in a temperature of a kneaded product in a range of 130°C to 160°C. A ram pressure during the kneading was in a range of 0.5 MPa to 4.0 MPa. After completion of the kneading, cooling to room temperature was performed, and a kneaded product was obtained.

The following (D-6) and (D-7) were added to the obtained kneaded product, followed by mixing by a 6-inch roll testing machine to obtain a rubber composition for a tire. Blending in the obtained rubber composition for a tire is shown in Table 4.

(D) Other components
(D-4) Antioxidant (OZONONE 6C manufactured by Seiko Chemical Co., Ltd.)
(D-5) Lubricant (zinc oxide: zinc oxide Type III, manufactured by SEIDO Chemical Industry Co., Ltd.)
(D-6) Sulfur (Gold Flower brand oil-containing sulfur powder, manufactured by Tsurumi Chemical Industry Co., Ltd.)
(D-7) Vulcanization accelerator (N-(tert-butyl)-2-benzothiazolesulfenamide (TBBS): Sanceler NS-G, manufactured by SANSHIN Chemical Industry Co. Ltd.)

[Table 4]

| | | | Standard Example 1 | Standard Example 2 | Example 1 | Example 2 |
|---|---|---|---|---|---|---|
| Blending of rubber composition for tire | Diene-based rubber | A-1 | 100 | 100 | 100 | 100 |
| | Filler | B-1 | | | 32 | 32 |
| | | B-4 | 45 | 55 | 13 | 13 |
| | Silane coupling agent | C-1 | | | 6.4 | 6.4 |
| | Other components | D-1 | 3.0 | 3.0 | 3.0 | 3.0 |
| | | D-2 | 2.0 | 2.0 | 2.0 | 2.0 |
| | | D-4 | 2.0 | 2.0 | 2.0 | 2.0 |
| | | D-5 | 3.0 | 3.0 | 3.0 | 3.0 |
| | | D-6 | 2.3 | 2.3 | 2.3 | 2.3 |
| | | D-7 | 1.2 | 1.2 | 1.2 | 1.6 |
| Rubber composition for tire | Mooney viscosity (ML1+4, 100°C) | | 48 | 68 | 65 | 68 |
| Rubber material for tire | A hardness | | 65 | 72 | 65 | 67 |
| | Rolling resistance index | | 1.00 | 0.81 | 1.42 | 1.53 |
| | Wear index | | 1.00 | 0.98 | 1.28 | 1.25 |
| | Crosslink density (x E-05) (mol/mL) | | 28.7 | 30.2 | 24.0 | 26.5 |
| | Heat resistance index | | 100 | - | 131 | - |

A test piece for performing the same evaluation as in Experiment 1 was prepared from the obtained rubber composition for a tire. The obtained test piece was used to evaluate the physical properties (Mooney viscosity) evaluated in Experiment 1. The results are shown in Table 4.

(Preparation of Rubber Material for Tire)

Subsequently, the obtained rubber composition for a tire was press-vulcanized at 150°C for 10 minutes to obtain a rubber material for a tire. A test piece for performing the same evaluation as in Experiment 1 was prepared from the obtained rubber material for a tire. The obtained test piece was used to evaluate the physical properties (A hardness, fuel efficiency, wear resistance performance, and crosslink density) evaluated in Experiment 1. The results are shown in Table 4. Further, in Experiment 2, heat aging resistance in Standard Example 1 and Example 1 was evaluated as follows.

(Heat aging resistance)

The obtained rubber composition for a tire was vulcanized at 150°C for 20 minutes using a mold having a thickness of 2 mm, and the obtained vulcanized rubber sheet was punched with a JIS No. 3 dumbbell to obtain a sample. The sample was thermally aged in a gear oven set to a temperature of 80°C for 7 days (168 hours), and then the elongation at break was measured with a tensile tester in accordance with JIS K6251 together with an unaged sample. A ratio of the elongation at break before aging (Eb) to the elongation at break after aging (Ea) was obtained, and Ea/Eb was used as an index of the heat aging resistance. The calculated index was used to calculate a heat resistance index by the following calculation equation with the index in Standard Example 1 being set to 1. The larger the heat resistance index, the better the heat aging resistance, and when the heat resistance index is 105 or less, the heat aging resistance is inferior. The results are shown in Table 4.

(Heat resistance index) = {(index in Examples)/(index in Starndard Example 1)} $\times$ 100

From Table 4, it has been confirmed that the rubber material for a tire in which the BET specific surface area of the hydrophilic fumed silica is 50 $m^2/g$ or more has wear resistance higher than that of a rubber material for a tire produced using a masterbatch in which carbon black is kneaded.
In addition, it has been confirmed that the rubber material for a tire in which the BET specific surface area of the hydrophilic fumed silica is 50 $m^2/g$ or more has heat aging resistance higher than that of the rubber material for a tire produced using the masterbatch in which the carbon black is kneaded.

(Experiment 3)

The following components were charged into a pressurization kneader having a volume of 0.5 L such that blending amounts with respect to 100 parts by mass of a diene-based rubber were blending amounts as shown in Table 5. After charging, the components were kneaded for about 30 minutes at a rotor rotation speed in a range of 20 rpm to 40 rpm in a temperature of a kneaded product in a range of 130°C to 160°C. An air cylinder pressure was 0.7 MPa. After completion of the kneading, cooling to room temperature was performed, and the kneaded product was taken out to obtain a rubber composition for a tire. That is, in Experiment 3, the rubber composition for a tire was produced without using a masterbatch.

(A) Diene-based rubber
(A-1) Natural rubber SVR made in Vietnam
(B) Filler
(B-1) Hydrophilic fumed silica (Reolosil QS-30C manufactured by Tokuyama Corporation, nitrogen adsorption BET specific surface area: 300 $m^2/g$, tap density: 100 g/L)
(B-3) Precipitated silica (NipsilAQ, manufactured by Tosoh Silica Corporation, nitrogen adsorption BET specific surface area: 200 $m^2/g$, tap density: 300 g/L)
(B-4) Carbon black (SEAST 6 manufactured by Tokai Carbon Co., Ltd., nitrogen adsorption BET specific surface area: 120 $m^2/g$, tap density: 400 g/L)
(B-5) Hydrophilic fumed silica (Reolosil QS-10 manufactured by Tokuyama Corporation, nitrogen adsorption BET specific surface area: 140 $m^2/g$, tap density: 50 g/L)
(B-6) Hydrophilic fumed silica (Reolosil CP-102 manufactured by Tokuyama Corporation, nitrogen adsorption BET specific surface area: 200 $m^2/g$, tap density: 50 g/L)
(B-7) Hydrophilic fumed silica (Reolosil QS-40 manufactured by Tokuyama Corporation, nitrogen adsorption BET specific surface area: 380 $m^2/g$, tap density: 50 g/L)
(B-8) Hydrophilic fumed silica (Trial product manufactured by Tokuyama Corporation, nitrogen adsorption BET specific surface area: 420 $m^2/g$, tap density: 50 g/L)
(B-9) Hydrophilic fumed silica (Trial product manufactured by Tokuyama Corporation, nitrogen adsorption BET specific surface area: 450 $m^2/g$, tap density: 50 g/L)
(C) Silane coupling agent
(C-1) Mercapto-thiocarboxylate oligomer (NXT-Z45, manufactured by Momentive)
(D) Other components
(D-1) Lubricant (stearic acid, Beads Stearic Acid YR, manufactured by NOF Corporation)
(D-2) Process oil (Aromax 3 (TDAE Oil), manufactured by Fuji Kosan Co., Ltd.)
(D-4) Antioxidant (OZONONE 6C manufactured by Seiko Chemical Co., Ltd.)
(D-5) Lubricant (zinc oxide: zinc oxide Type III, manufactured by SEIDO Chemical Industry Co., Ltd.)
(D-6) Sulfur (Gold Flower brand oil-containing sulfur powder, manufactured by Tsurumi Chemical Industry Co., Ltd.)
(D-7) Vulcanization accelerator (N-(tert-butyl)-2-benzothiazolesulfenamide (TBBS): Sanceler NS-G, manufactured by SANSHIN Chemical Industry Co. Ltd.)

As a method for producing the trial products (B-8) and (B-9), a method described in Surface Science Vol. 5, No. 1 (1984) was adopted. Specifically, a flame temperature was converted into an adiabatic temperature calculated based on heat of formation and specific heat in an equilibrium state during production of fumed silica, and the adiabatic temperature was controlled to 1700°C to 1800°C to produce the hydrophilic fumed silica (B-8) and (B-9).
A test piece for performing the same evaluation as in Experiment 1 was prepared from the obtained rubber composition for a tire. The obtained test piece was used to evaluate the physical properties (Mooney viscosity) evaluated in Experiment 1. The results are shown in Table 5.

(Preparation of Rubber Material for Tire)

Subsequently, the obtained rubber composition for a tire was press-vulcanized at 150°C for 10 minutes to obtain a rubber material for a tire. A test piece for performing the same evaluation as in Experiment 1 was prepared from the obtained rubber material for a tire. The obtained test piece was used to evaluate the physical properties (A hardness, fuel efficiency, wear resistance performance, and crosslink density) evaluated in Experiment 1.

[Table 5]

| | | | Standard Example 1 | Standard Example 2 | Standard Example 3 | Standard Example 4 | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|---|---|---|
| Blending of rubber composition for tire | Diene-based rubber | A-1 | 100 | 100 | 100 | 100 | 100 | 100 | 100 | 100 | 100 | 100 | 100 | 100 | 100 | 100 | 100 | 100 |
| | Filler | B-1 | | | | | | | 36 | 36 | | 30 | | 32 | | | | |
| | | B-3 | | | 32 | 42 | | | | | | | | | | | | |
| | | B-4 | 40 | 50 | 13 | 13 | 13 | 13 | 13 | 13 | 13 | 13 | 13 | 13 | 13 | 22.5 | 13 | 13 |
| | | B-5 | | | | | 36 | | | | | | | | | | | |
| | | B-6 | | | | | | 36 | | | | | | | | | | |
| | | B-7 | | | | | | | | | 36 | | 29 | | 32 | 22.5 | | |
| | | B-8 | | | | | | | | | | | | | | | 28 | |
| | | B-9 | | | | | | | | | | | | | | | | 28 |
| | Silane coupling agent | C-1 | | | 4.3 | 6.9 | 3.3 | 4.7 | 4.7 | 7.0 | 8.9 | 5.9 | 7.3 | 6.3 | 6.3 | 5 | 7.8 | 8.2 |

(continued)

| | | | Standard Example 1 | Standard Example 2 | Standard Example 3 | Standard Example 4 | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|---|---|---|
| | Other components | D-1 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | | D-2 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | | D-4 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | | D-5 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | | D-6 | 2.3 | 2.3 | 2.3 | 2.3 | 2.3 | 2.3 | 2.3 | 2.3 | 2.3 | 2.3 | 2.3 | 2.3 | 2.3 | 2.3 | 2.3 | 2.3 |
| | | D-7 | 1.2 | 1.2 | 1.6 | 1.6 | 1.6 | 1.6 | 1.6 | 1.6 | 1.6 | 1.6 | 1.6 | 1.6 | 1.6 | 1.6 | 1.6 | 1.6 |
| Rubber composition for tire | Mooney viscosity (ML1+4, 100°C) | | 67 | 81 | 45 | 53 | 54 | 57 | 76 | 63 | 69 | 55 | 57 | 55 | 56 | 55 | 58 | 61 |
| Rubber material for tire | A hardness | | 66 | 70 | 63 | 69 | 68 | 68 | 66 | 69 | 71 | 65 | 65 | 67 | 67 | 66 | 67 | 66 |
| | Rolling resistance index | | 1.0 | 0.8 | 1.4 | 1.2 | 1.3 | 1.2 | 1.1 | 1.2 | 1.4 | 1.4 | 1.4 | 1.4 | 1.5 | 1.2 | 1.7 | 1.5 |
| | Wear index | | 1.0 | 1.0 | 1.6 | 1.8 | 2.2 | 2.3 | 2.7 | 2.4 | 2.9 | 3.0 | 3.0 | 2.7 | 1.7 | 1.4 | 3.1 | 3.2 |
| | Crosslink density (× E-05) (mol/mL) | | 28.2 | 30.4 | 27.8 | 28.7 | 26.4 | 25.9 | 21.0 | 25.2 | 27.1 | 25.1 | 24.7 | 26.1 | 26.5 | 26.4 | 24.5 | 22.5 |

From Table 5, it has been confirmed that the rubber material for a tire in which the hydrophilic fumed silica is blended at a high concentration without using the masterbatch has wear resistance higher than that of a rubber material for a tire produced using a masterbatch in which carbon black or silica produced by wet-process is kneaded.

## Claims

1. A masterbatch comprising:
13 parts by mass or more and 130 parts by mass or less of hydrophilic fumed silica, and 1 part by mass or more and 40 parts by mass or less of a silane coupling agent, with respect to 100 parts by mass of a diene-based rubber.

2. The masterbatch according to claim 1, wherein
the hydrophilic fumed silica has a BET specific surface area of 50 $m^2/g$ or more and 500 $m^2/g$ or less.

3. The masterbatch according to claim 1 or 2, wherein
the diene-based rubber is at least one selected from the group consisting of a natural rubber and an isoprene rubber.

4. The masterbatch according to any one of claims 1 to 3, further comprising:
1 part by mass or more and 40 parts by mass or less of a lubricant with respect to 100 parts by mass of the diene-based rubber.

5. A method for producing a masterbatch, comprising:
a step of using a kneader to knead a diene-based rubber, hydrophilic fumed silica, and a silane coupling agent.

6. The method for producing a masterbatch according to claim 5, wherein
the hydrophilic fumed silica has a BET specific surface area of 50 $m^2/g$ or more and 500 $m^2/g$ or less.

7. The method for producing a masterbatch according to claim 5 or 6, further comprising:
kneading a lubricant.

8. A rubber composition for a tire, comprising:
5 parts by mass or more and 90 parts by mass or less of hydrophilic fumed silica, and 1.5 parts by mass or more and 30 parts by mass or less of a silane coupling agent, with respect to 100 parts by mass of a diene-based rubber.

9. The rubber composition for a tire according to claim 8, wherein
the hydrophilic fumed silica has a BET specific surface area of 50 $m^2/g$ or more and 500 $m^2/g$ or less.

10. The rubber composition for a tire according to claim 8, further comprising:
the masterbatch according to any one of claims 1 to 4.

11. A method for producing a rubber composition for a tire, comprising:
a step of kneading the masterbatch according to any one of claims 1 to 4 and a diene-based rubber.

12. A rubber material for a tire, wherein

    A hardness is 55 to 72, and
    a crosslink density based on a toluene swelling method is $4 \times 10^{-5}$ mol/mL or more and less than $27.5 \times 10^{-5}$ mol/mL.

13. The rubber material for a tire according to claim 12, which is obtained by vulcanizing the rubber composition for a tire according to any one of claims 8 to 10.

Fig. 1

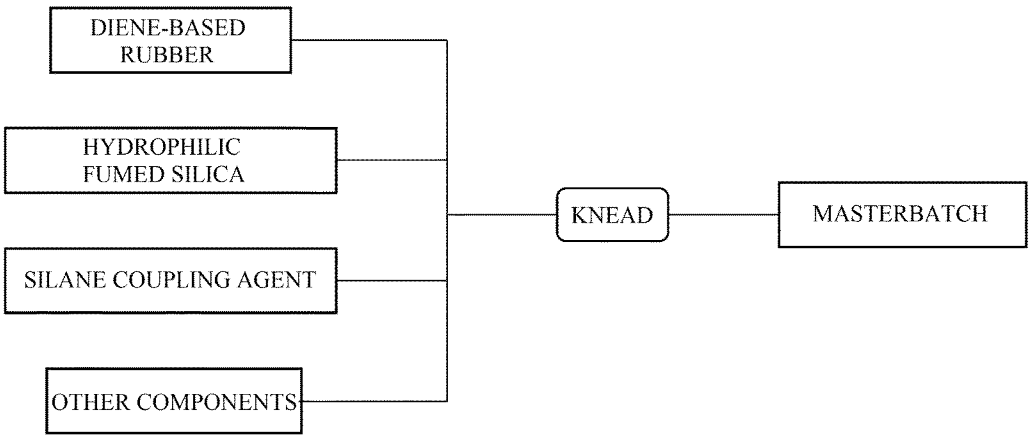
DIENE-BASED RUBBER
HYDROPHILIC FUMED SILICA
SILANE COUPLING AGENT
OTHER COMPONENTS
KNEAD
MASTERBATCH

Fig. 2

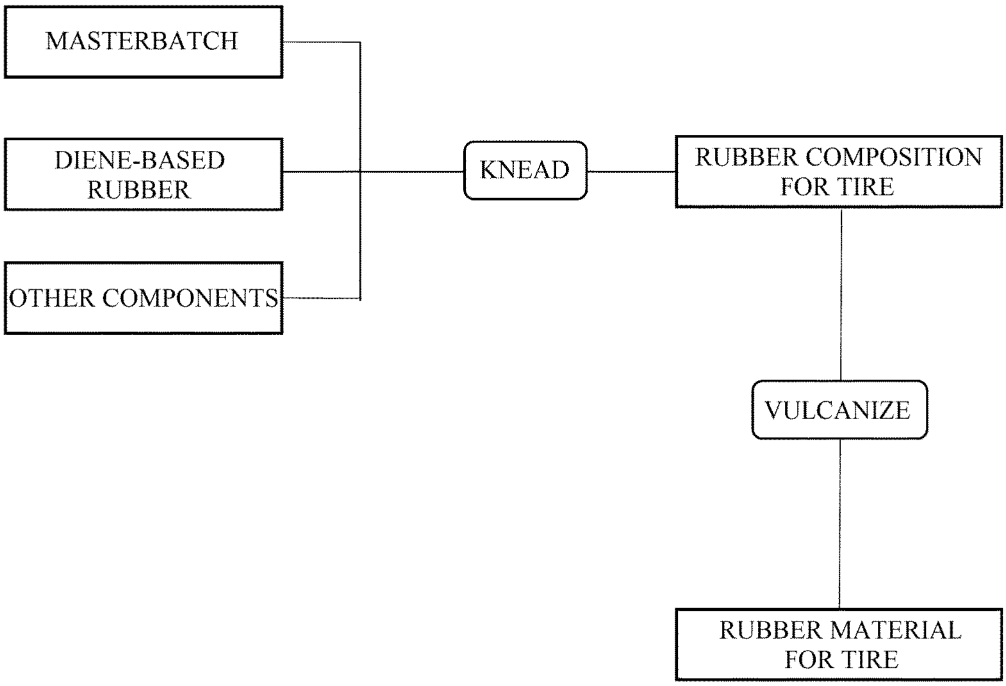
MASTERBATCH
DIENE-BASED RUBBER
OTHER COMPONENTS
KNEAD
RUBBER COMPOSITION FOR TIRE
VULCANIZE
RUBBER MATERIAL FOR TIRE

## INTERNATIONAL SEARCH REPORT

International application No.
**PCT/JP2022/036258**

**A. CLASSIFICATION OF SUBJECT MATTER**

***C08J 3/22***(2006.01)i; ***B60C 1/00***(2006.01)i; ***C08K 3/36***(2006.01)i; ***C08K 5/54***(2006.01)i; ***C08K 5/541***(2006.01)i; ***C08L 7/00***(2006.01)i; ***C08L 9/00***(2006.01)i
FI: C08J3/22 CEQ; B60C1/00 Z; C08L7/00; C08L9/00; C08K3/36; C08K5/54; C08K5/541

According to International Patent Classification (IPC) or to both national classification and IPC

**B. FIELDS SEARCHED**

Minimum documentation searched (classification system followed by classification symbols)

C08J3/00-3/28; C08K3/00-13/08; C08L1/00-101/14; B60C1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-183061 A (THE YOKOHAMA RUBBER CO., LTD.) 22 October 2015 (2015-10-22) claim 1, paragraphs [0025], [0028], [0038], [0045], tables 2, 3, example 1 | 1-13 |
| X | JP 2015-183062 A (THE YOKOHAMA RUBBER CO., LTD.) 22 October 2015 (2015-10-22) claim 1, paragraphs [0009], [0035], [0037], table 2, example 3 | 1-13 |
| X | JP 2012-246331 A (TOYO TIRE & RUBBER CO., LTD.) 13 December 2012 (2012-12-13) paragraphs [0030], [0035], table 2, comparative example 8 | 8-9, 12-13 |
| A | JP 2000-345042 A (KITAGAWA KOGYO CO., LTD.) 12 December 2000 (2000-12-12) paragraph [0022] | 5-7 |
| A | JP 2015-067691 A (TOKUYAMA CORP.) 13 April 2015 (2015-04-13) paragraph [0076] | 1-13 |
| A | WO 2020/196218 A1 (DAI NIPPON PRINTING CO., LTD.) 01 October 2020 (2020-10-01) paragraph [0067] | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 November 2022** | **29 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/036258**

| Patent document cited in search report | Publication date (day/month/year) | Patent family member(s) | Publication date (day/month/year) |
|---|---|---|---|
| JP 2015-183061 A | 22 October 2015 | (Family: none) | |
| JP 2015-183062 A | 22 October 2015 | (Family: none) | |
| JP 2012-246331 A | 13 December 2012 | (Family: none) | |
| JP 2000-345042 A | 12 December 2000 | (Family: none) | |
| JP 2015-067691 A | 13 April 2015 | (Family: none) | |
| WO 2020/196218 A1 | 01 October 2020 | US 2022/0212452 A1<br>paragraph [0073] | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015218254 A
- JP H06256578 A
- JP 2019094463 A
- JP 2011052067 A
- WO 2004099075 A


### Non-patent literature cited in the description


- *Surface Science,* 1984, vol. 5 (1